(19) Europäisches Patentamt

European Patent Office

Office européen des brevets

(11) Veröffentlichungsnummer: **0 308 707 B1**

(12) **EUROPÄISCHE PATENTSCHRIFT**

(45) Veröffentlichungstag der Patentschrift: **20.05.92**

(21) Anmeldenummer: **88114370.5**

(22) Anmeldetag: **02.09.88**

(51) Int. Cl.⁵: **G21C 3/16**

(54) **Brennstab für ein Kernreaktor-Brennelement.**

(30) Priorität: **15.09.87 DE 3730973**

(43) Veröffentlichungstag der Anmeldung:
**29.03.89 Patentblatt 89/13**

(45) Bekanntmachung des Hinweises auf die
Patenterteilung:
**20.05.92 Patentblatt 92/21**

(84) Benannte Vertragsstaaten:
**BE CH DE ES FR GB IT LI SE**

(56) Entgegenhaltungen:
**EP-A- 0 076 201**
**DE-A- 3 318 138**
**FR-A- 2 229 119**
**US-A- 4 036 691**

(73) Patentinhaber: **SIEMENS AKTIENGESELL-
SCHAFT**
**Wittelsbacherplatz 2**
**W-8000 München 2(DE)**

(72) Erfinder: **Schlomm, Hartmut, Dipl.-Ing.**
**Amselweg 7**
**W-6477 Limeshain(DE)**
Erfinder: **Martin, Konrad**
**Schwarzeweg 4**
**W-6464 Linsengericht(DE)**

# Beschreibung

Die Erfindung betrifft einen Brennstab für ein Kernreaktor-Brennelement nach dem Oberbegriff des Patentanspruches 1.

Ein derartiger Brennstab ist bereits üblich. An einem oder auch an beiden Enden der Säule aus Kernbrennstofftabletten kann sich bei diesem üblichen Brennstab eine Zwischenscheibe aus Aluminiumoxid befinden, die verhindern soll, daß kleine Kernbrennstoffkörper, die von den keramischen Kernbrennstofftabletten während des Betriebes in einem Kernreaktor abbröckeln, in den Leerraum im Hüllrohr am betreffenden Rohrende gelangen und dort zu einer unerwünschten Änderung der Neutronenfluß- und Temperaturverteilung im Reaktorkern führen.

Aluminiumoxid ist kein Kernbrennstoff, und der Erfindung liegt daher die Aufgabe zugrunde, zur wirtschaftlichen Ausnutzung von Kernbrennstoff in einem Kernreaktor den von der Zwischenscheibe aus Aluminiumoxid eingenommenen Raum auch mit Kernbrennstoff auffüllen zu können.

Zur Lösung dieser Aufgabe hat ein Brennstab der eingangs erwähnten Art erfindungsgemäß die Merkmale des kennzeichnenden Teiles des Patentanspruches 1.

Die Zwischenscheibe braucht dann nur ein verhältnismäßig dünnes Blech zu sein, an dem das Blattfederpaar angeformt ist und das bei weitem nicht soviel Raum einnimmt wie eine Zwischenscheibe aus Aluminiumoxid. Auch kann die Zwischenscheibe an der Schraubenfeder angebracht werden, bevor diese bei der Fertigung des Brennstabes in das Hüllrohr eingefüllt wird. Auch eine Verwechselung von Zwischenscheiben mit Kernbrennstofftabletten wie bei Zwischenscheiben aus Aluminiumoxid kann so bei der Fertigung des Brennstabes nicht auftreten, so daß gewährleistet ist, daß sich im Hüllrohr des Brennstabes auch tatsächlich nur Kernbrennstofftabletten an ihren Sollstellen in der Tablettensäule befinden.

Mit der Weiterbildung des Brennstabes entsprechend dem Patentanspruch 2 kann sicher verhindert werden, daß sich die Zwischenscheibe beim Einfüllen der Druckfeder in das Hüllrohr doch noch von der Druckfeder löst.

Mit der Weiterbildung nach Patentanspruch 3 kann sehr leicht vermieden werden, daß sich die Zwischenscheibe beim Einsetzen der Schraubenfeder in das Hüllrohr an der Hüllrohrinnenseite verklemmt.

Mit der Weiterbildung nach Patentanspruch 4 wird am anderen Rohrende des Hüllrohres Leerraum zur Aufnahme von gasförmigen Kernspaltprodukten während des Betriebes in einem Kernreaktor geschaffen. Andererseits gewährleistet die Einengung des Innenquerschnitts des Stützrohres aber auch, daß auch am anderen Rohrende keine von den Kernbrennstofftabletten abgebröckelte kleine Kernbrennstoffkörper in den dort befindlichen Leerraum gelangen können. Dennoch können die gasförmigen Kernspaltprodukte ungehindert in diesen Leerraum eintreten.

Die Erfindung und ihre Vorteile seien anhand der Zeichnung an einem Ausführungsbeispiel näher erläutert:

FIG 1 zeigt im Längsschnitt einen erfindungsgemäßen Brennstab.

FIG 2 zeigt im Längsschnitt eine an einer Schraubenfeder angebrachte Zwischenscheibe.

FIG 3 zeigt in Draufsicht die Seite der Zwischenscheibe nach FIG 2, die an einer Säule aus Kernbrennstofftabletten anliegt.

FIG 4 zeigt eine Seitenansicht der Zwischenscheibe nach den Figuren 2 und 3.

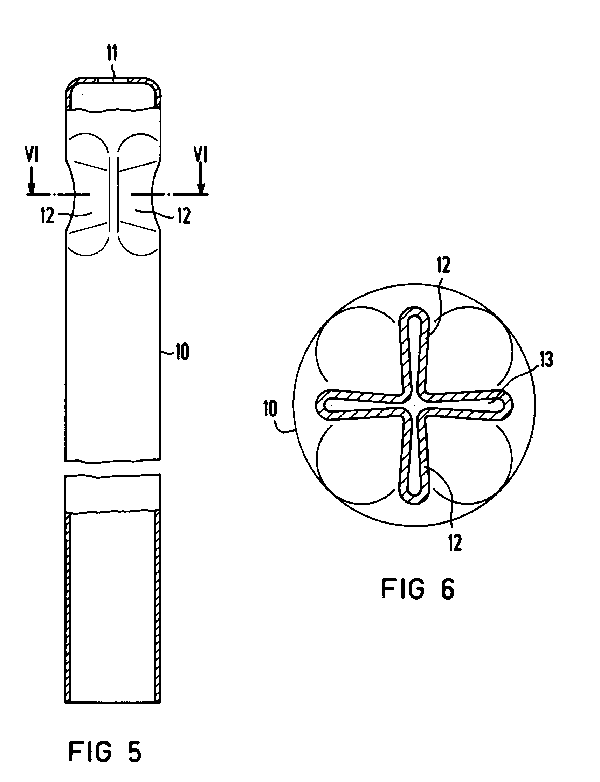

FIG 5 zeigt zum Teil geschitten eine Seitenansicht des Endes des Stützrohres im Brennstab nach FIG 1, an dem die Kernbrennstoffsäule anliegt.

FIG 6 zeigt einen Querschnitt entsprechend der strichpunktierten Linie VI-VI in FIG 5.

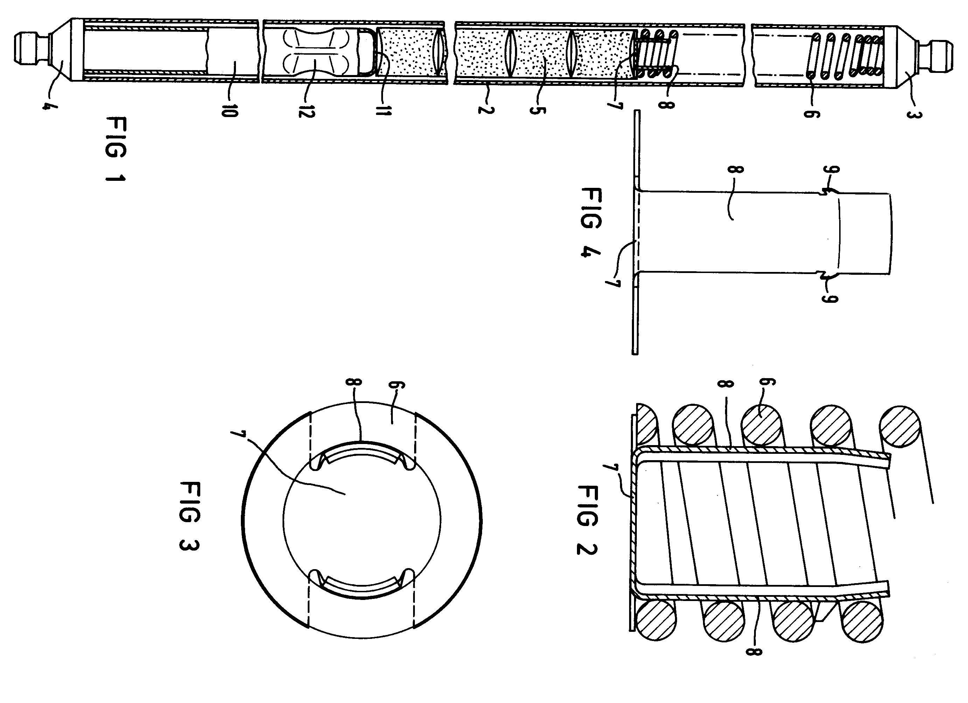

Der Brennstab nach FIG 1 weist ein Hüllrohr 2 aus einer Zirkonium-Legierung auf, das an beiden Enden mit je einer Endkappe 3 und 4 aus einer Zirkonium-Legierung verschlossen ist. Diese Endkappen 3 und 4 sind gasdicht mit dem Hüllrohr 2 verschweißt.

Im Hüllrohr 2 befindet sich eine Säule aus keramischen Kernbrennstofftabletten 5. Ferner ist an einem Ende des Hüllrohres 2 eine Schraubenfeder 6 koaxial zur Säule aus Kernbrennstofftabletten 5 und damit auch koaxial zum Hüllrohr 2 eingesetzt. Mit einem Ende stützt sich die eine Druckfeder darstellende Schraubenfeder 6 an der Endkappe 3 ab, während sich am anderen Ende dieser Schraubenfeder 6 eine Zwischenscheibe 7 aus Stahlblech befindet, die dünner als jede Kernbrennstofftablette 5 ist. Auf der einen Seite ist an dieser Zwischenscheibe 7 ein Blattfederpaar 8 angeformt, das im wesentlichen parallel zur Längsachse der Schraubenfeder 6 und damit auch des Hüllrohres 2 ist, sich innerhalb der Schraubenfeder 6 befindet und aufgrund seiner nach außen gerichteten Spreizkraft in kraftschlüssiger Verbindung mit den Wendeln der Schraubenfeder 6 steht. Auf der Außenseite einer Blattfeder des Blattfederpaares 8 sind zwei Sicherungsnasen 9 angeformt, mit denen diese Blattfeder 8 eine Wendel der Schraubenfeder 6 hintergreift.

Mit der anderen Seite liegt die Zwischenscheibe 7 an der Säule aus Kernbrennstofftabletten 5 an und berührt dort eine Deckfläche der am Säulenende befindlichen Kernbrennstofftablette.

Am anderen Ende des Brennstabes befindet sich im Hüllrohr 2 ein zum Hüllrohr 2 koaxiales Stützrohr 10, das mit einem Ende an der Endkappe 4 anliegt und das aus Stahl besteht. Am anderen Ende hat dieses Stützrohr 10 eine nach innen gerichtete Umbördelung, die eine zentrale Gasdurchtrittsöffnung 11 bildet. Auf der Außenseite dieser Umbördelung liegt die Säule aus Kernbrennstofftabletten 5, d.h. die Deckfläche der Kernbrennstofftablette am Säulenende an.

An vier Stellen 12, die voneinander in Bezug auf die Längsachse des Stützrohres 10 einen Winkelabstand von 90° haben, ist der Mantel des Stützrohres 10 am Ende mit der die Gasdurchtrittsöffnung bildenden Umbördelung nach innen gezogen und bildet so an dieser Stelle einen eingeengten Innenquerschnitt 13 des Stützroheres 10.

Die Druckkraft der Schraubenfeder 6 preßt die Säule aus Kernbrennstofftabletten 5 gegen das Stützrohr 10 und dieses wiederum gegen die Endkappe 4. Während des Betriebes in einem Kernreaktor freiwerdende gasförmige Kernspaltprodukte können ungehindert an der Zwischenscheibe 7 vorbei in den von der Schraubenfeder 6 eingenommenen Innenraum des Hüllrohres 2 und durch die Gasdurchtrittsöffnung 11 und die Querschnittsverengung 13 am Stützrohr 10 in den Leerraum im Stützrohr 10 gelangen. Von den Kernbrennstofftabletten 5 abgebröckelte kleine Kernbrennstoffkörper können jedoch weder die Zwischenscheibe 7 zur Schraubenfeder 6 hin noch die Durchtrittsöffnung 11 und insbesondere die Querschnittsverengung 13 in den Innenraum des Stützrohres 10 hinein passieren.

## Patentansprüche

1. Brennstab für ein Kernreaktor-Brennelement mit einem an beiden Enden verschlossenen metallenen Hüllrohr, in dem eine Säule aus Kernbrennstofftabletten und an einem Rohrende eine aus einer Schraubenfeder bestehende Druckfeder koaxial zur Säule und mit einer Zwischenscheibe zwischen der Säule und der Schraubenfeder angeordnet ist, **dadurch gekennzeichnet,** daß die Zwischenscheibe (7) an einer Seite ein Blattfederpaar (8) aufweist, das in kraftschlüssiger Verbindung mit Wendeln der Schraubenfeder (6) steht.

2. Brennstab nach Anspruch 1, **dadurch gekennzeichnet,** daß das Blattfederpaar (8) eine Sicherungsnase (9) aufweist, die eine Wendel der Schraubenfeder (6) hintergreift.

3. Brennstab nach Anspruch 1, **dadurch gekennzeichnet,** daß sich das Blattfederpaar (8) innerhalb der Schraubenfeder (6) befindet.

4. Brennstab nach Anspruch 1, **dadurch gekennzeichnet,** daß sich am anderen Rohrende im Hüllrohr (2) ein Stützrohr (10) befindete, das mit einem Ende, an dem es offen ist und eine nach innen gerichtete Umbördelung hat, an der Säule anliegt en Mantel an diesem Ende unter Bildung eines eingeengten Innenquerschnitts (13) nach innen gezogen ist.

## Claims

1. Fuel rod for a nuclear reactor fuel element having a metal cladding tube which is sealed at both ends and in which there are arranged a column of nuclear fuel pellets and at one tube end a compression spring, consisting of a helical spring, coaxial to the column and having a shim between the column and the helical spring, characterised in that the shim (7) on one side has a pair of leaf springs (8), connected in a force-locking manner with spirals of the helical spring (6).

2. Fuel rod according to claim 1, characterised in that the pair of leaf springs (8) has a securing lug (9) which engages behind a spiral of the helical spring (6).

3. Fuel rod according to claim 1, characterised in that the pair of leaf springs (8) is located inside the helical spring (6).

4. Fuel rod according to claim 1, characterised in that at the other tube end, in the cladding tube (2), there is a support tube (10) which with one end, at which it is open and at which it has an inwardly directed flange, rests against the column, and the jacket of which support tube at this end is drawn inwards, forming a constricted inside cross-section (13).

## Revendications

1. Crayon combustible pour un assemblage combustible de réacteurs nucléaires, comprenant un tube de gainage métallique, qui est fermé aux deux extrémités et dans lequel sont disposés un empilement de pastilles de matière combustible et, à une extrémité du tube et coaxialement à l'empilement, un ressort de pression constitué d'un ressort hélicoïdal, avec un disque intermédiaire entre l'empilement et le ressort hélicoïdal,
caractérisé
en ce que le disque intermédiaire (7) comporte d'un côté une paire de ressorts à lame (8), qui est en liaison de coopération de force avec des spires du ressort hélicoïdal (6).

2. Crayon combustible suivant la revendication 1, caractérisé
en ce que la paire de ressorts à lame (8) comporte un bec de sécurité (9), qui s'accroche derrière une spire du ressort hélicoïdal (6).

3. Crayon combustible suivant la revendication 1, caractérisé
en ce que la paire de ressorts à lame (8) se trouve à l'intérieur du ressort hélicoïdal (6).

4. Crayon combustible suivant la revendication 1 caractérisé
en ce qu'un tube d'appui (10), qui se trouve à l'autre extrémité du tube de gainage (2), qui s'applique à l'empilement par une extrémité où il est ouvert et qui possède un bord rabattu dirigé vers l'intérieur, est en contact avec l'empilement et sa surface latérale est, à cette extrémité, tirée vers l'intérieur, en formant une section transversale intérieure (13) rétrécie.

FIG 1

FIG 4

FIG 2

FIG 3

FIG 5

FIG 6